# EUROPÄISCHE PATENTANMELDUNG

(11) **EP 1 013 594 A2**
(43) Veröffentlichungstag der Anmeldung: **28.06.2000**
(21) Anmeldenummer: 99125624.9
(22) Anmeldetag: 22.12.1999
(51) Int. Cl.: B66B 1/34

(54) **Zugelement-Wegesensor**

(30) Priorität: 22.12.1998 DE 19859474
(71) Anmelder: ASM AUTOMATION, SENSORIK, MESSTECHNIK GMBH, D-82008 Unterhaching (DE)
(72) Erfinder: Steinich, Klaus-Manfred, 85604 Poering (DE)
(74) Vertreter: Alber, Norbert, Dipl.-Ing.

(57) **Zusammenfassung**

Die Erfindung betrifft Zugelement-Wegsensoren mit vereinfachtem mechanischen Aufbau sowie eine mit gleichen Elementen verwirklichte Hubvorrichtung, die das exakte vertikale Positionieren eines Objektes ermöglichen. Ein erfindungsgemäßer Zugelement-Wegsensor mit einer Zugelement-Wickeltrommel, einer damit wirkverbundenen Vorspanneinheit zum Vorspannen der Wickeltrommel in die Aufwickelrichtung, einer Bestimmungseinheit zum Bestimmen der von der Wickeltrommel abgezogenen Länge des Zugelementes, kennzeichnet sich dadurch, daß das Zugelement auf der Wickeltrommel in einer einzigen Radialebene der Wickeltrommel spiralig in mehreren Lagen übereinander gewickelt ist. Eine Hubvorrichtung zum Heben einer Last mit wenigstens zwei Hubeinheiten und wenigstens einem Wegsensor, kennzeichnet sich dadurch, daß wenigstens eine der Hubvorrichtungen mit einer Bestimmungseinheit zum Bestimmen der von der Wickeltrommel abgezogenen Länge des Zugelementes ausgestattet ist und alle Zugelemente an der selben Last angreifen.

## Beschreibung

### I. Anwendungsgebiet

Die Erfindung betrifft Zugelement-Wegsensoren sowie eine mit gleichen Elementen verwirklichte Hubvorrichtung.

### II. Technischer Hintergrund

Zugelement-Wegsensoren sind in vielfacher Ausformung bekannt, um die exakte Positionierung eines bestimmten Bauteiles, welches sich insbesondere über große Weglängen bewegen kann, zu bestimmen, beispielsweise der Kabine eines Aufzuges. Ein derartiger Zugelement-Wegsensor weist ein Zugelement, etwa ein Seil, auf, welches auf einer in die Aufwickelrichtung vorgespannten Wickeltrommel aufgewickelt ist, und dessen freies Ende mit demjenigen Gegenstand verbunden ist, dessen Position bestimmt werden soll, beispielsweise der Aufzugskabine. Die Vorspannung der Wickeltrommel erfolgt beispielsweise über eine Flachspiralfeder, die beispielsweise koaxial zur Wickeltrommel angeordnet und mit dieser drehfest verbunden ist.

Die Wickeltrommel ist ferner mit einer Bestimmungseinheit gekoppelt, die die Umdrehungen bzw. Winkelelemente registriert, welche die Wickeltrommel in Aufwickelrichtung bzw. Abwickelrichtung durchläuft, und daraus über eine Auswertelektronik die abgezogene Länge des Zugelementes bestimmt.

Zur Vereinfachung dieser Bestimmung ist das Zugelement, beispielsweise das Seil, in nur einer einzigen Lage auf dem Umfang der Wickeltrommel axial nebeneinander aufgewickelt, da hierdurch eine Umdrehung der Wickeltrommel immer der exakt gleichen Länge des Zugelementes entspricht.

Um die Bewicklung in nur einer Lage und das Überspringen des Zugelementes beim Bewickeln der Wickeltrommel in eine zweite Lage zu verhindern, müssen mechanische Vorkehrungen konstruktiver Art an dem Wegsensor getroffen werden.

Anstelle einer Bestimmung der Drehung der Wickeltrommel ist es auch bekannt, direkt die abgezogene Länge des Zugelementes zu bestimmen, indem beispielsweise am Auslauf des Zugelementes an dem Gehäuse der Wickeltrommel eine Zähleinrichtung angeordnet ist, und das Zugelement immer gleich große unterschiedlich gestaltete Abschnitte aufweist, beispielsweise in Längsrichtung gleichmäßig angeordnete Lochungen, und diese unterschiedlichen Abschnitte bzw. Lochungen von einer Zähleinrichtung gezählt und in eine Abzugslänge umgerechnet werden.

Der Nachteil dieser Lösung besteht darin, daß ein speziell gestaltetes Zugelement verwendet werden muß, dessen unterschiedlich ausgebildete Abschnitte auch über lange Zeitdauer und nach einer großen Zahl von Auf- und Abwicklungen unverändert aufrechterhalten bleiben müssen. Bei mechanisch unterschiedlich gestalteten Abschnitten, wie etwa Lochungen, Verzahnungen etc., am Zugelement, unterliegen diese einem starken mechanischen Verschleiß und haben damit nur eine begrenzte Lebensdauer.

Im Gegensatz dazu ist die Bestimmung mittels eines Drehwinkelgebers, der mit der Drehung der Wickeltrommel gekoppelt ist, quasi verschleißfrei realisierbar und ergibt eine sehr gute Gesamtlebensdauer.

### III. Darstellung der Erfindung

### a) Technische Aufgabe

Da es für einige Anwendungsfällte, z. B. aufgrund der Einbausituation, günstig ist, den Wegsensor axial möglichst kurz zu bauen, besteht die Aufgabe der vorliegenden Erfindung darin, den mechanischen Aufbau des Zugelement-Wegsensors zu vereinfachen, und insbesondere auf diejenigen Bauteile zu verzichten, die für das einlagige Bewickeln der Wickeltrommel notwendig sind.

Eine weitere Aufgabe besteht darin, mit Hilfe derartiger Zugelement-Wegsensoren Handhabungsvorrichtungen, insbesondere Hubvorrichtungen zu schaffen, die das exakte vertikale Positionieren eines Objektes ermöglichen.

### b) Lösung der Aufgabe

Diese Aufgabe ist durch die Merkmale der Ansprüche 1, 6 und 10-13 gelöst. Vorteilhafte Ausführungsformen ergeben sich aus den Unteransprüchen.

Die mechanische Vereinfachung des Zugelement-Wegsensors ergibt sich dadurch, daß das Zugelement spiralig in einer einzigen Radialebene und nicht axial nebeneinander auf die Wickeltrommel gewickelt wird. Der sich scheinbar daraus ergebende Nachteil für die Auswertung, daß nämlich mit zunehmender Bewicklung die Umfangslänge einer einzigen Umwicklung der Wickeltrommel immer größer wird, wird auf nicht-mechanischem, elektronischem Wege eliminiert.

Zur Bestimmung der exakten Abzugslänge des Zugelementes wird eine Auswerteelektronik verwendet, die einem bestimmten Drehwinkel der Wickeltrommel nicht eine immer gleiche Länge des Zugelementes zuordnet, sondern auch die momentane Wicklungsanzahl berücksichtigt.

Eine besonders einfache Lösung besteht in einer lernfähigen Auswertungsschaltung dergestalt, daß vor Inbetriebnahme des Zugelement-Wegsensors ein einziges Mal eine definierte Länge des Zugelementes von der Wickeltrommel abgezogen wird, beispielsweise die bekannte vollständige Länge des Zugelementes, und die bis dahin durchlaufenen Winkelsegmente der Wickeltrommel bzw. des Drehwinkelgebers von der Auswerteelektronik registriert werden. Alle kleineren und gegebenenfalls auch größeren Auszugslängen werden entsprechend z. B. arithmetisch, interpoliert bzw. extrapoliert.

In einer bevorzugten Ausführungsform kann auch der bei der Bewicklung der Wickeltrommel sich ergebende Sprung im Wickeldurchmesser an jeweils einer bestimmten Drehlage, welche dem Befestigungspunkt des inneren Endes des aufgewickelten Zugelementes entspricht, ebenfalls berücksichtigt werden.

Wenn als Vorspanneinheit für die Wickeltrommel die üblichen Flachspiralfedern verwendet werden, und als Bestimmungseinheit zur Bestimmung der abgezogenen Länge des Zugelementes die bekannten Drehwinkelgeber, können - bis auf die vereinfachte Gehäusekonstruktion im stark vereinfachten Einlaufbereich für das Zugelement in das Gehäuse des Wegsensors - alle bisher bekannten Bauteile und gegebenenfalls selbst das Gehäuse weiter verwendet werden. Änderungen sind nur an der Auswerteelektronik notwendig.

Eine andere Möglichkeit besteht darin, daß die Bestimmungseinheit direkt die Relativbewegung des Zugelementes gegenüber einem ortsfesten Punkt, beispielsweise dem -Gehäuse, ermittelt, und beispielsweise in der Nähe des Seileinlaufes am Gehäuse befestigt ist.

Zu diesem Zweck muß das Zugelement in Längsrichtung in einem definierten Abstand angeordnete, unterscheidbare Abschnitte aufweisen, deren Auflösung allerdings auch deren Meßgenauigkeit bestimmt. Da derartige Meßsensoren bis auf zehntel oder gar hundertstel Millimeter exakte Positionsbestimmungen durchführen sollen, ist es in der Regel aufwendiger, eine solche abschnittweise Unterscheidbarkeit mit nur wenige zehntel oder gar wenige hundertstel Millimeter langen Einzelabschnitten über die gesamte Länge des Zugelementes anzuordnen als eine einzige Umdrehung eines Drehwinkelgebers. Vorzugsweise werden die Abschnitte des Zugelementes nicht mechanisch unterscheidbar, sondern elektrisch unterscheidbar gestaltet, beispielsweise abschnittweise unterschiedlich magnetisiert oder abschnittweise metallisch und nicht metallisch gestaltet oder durch geeignete Behandlungsmethoden unterschiedlich optisch reflektierend gestaltet.

In letzteren Fall kann als Grundmaterial kein Metallband gewählt werden, das ansonsten eine mechanisch bevorzugte Ausführungsform des Zugelementes bildet. Prinzipiell wird als Zugelement anstelle eines sonst üblichen Seiles, wie es bei einlagiger Bewicklung der Wickeltrommel verwendet wird, vorzugsweise ein breites und im Vergleich dazu möglichst dünnes Band verwendet, um eine saubere spiralige Bewicklung in einer einzigen Radialebene zu ermöglichen, und damit pro Wicklung immer wieder die exakt gleiche Wicklungslänge bei jeder neuen Bewicklung zu erzielen.

Grundsätzlich muß das Zugelement in Längsrichtung stabil, also möglichst nicht dehnbar, sein und in Dickenrichtung eine immer möglichst gleiche Dicke aufweisen, also nicht expandier- und/oder komprimierbar sein.

Weiterhin können grundsätzlich folgende Nachteile im Praxisbetrieb auftreten:

Aufgrund der Federverspannung der Wickeltrommel kann - wenn beim Aufwickeln ein zu geringer Widerstand am Zugelement anliegt - die Wickeltrommel sehr hohe Drehzahlen erreichen, mit der Folge, daß am Ende des Aufwickelvorganges das Ende des Zugelementes mit hoher Wucht auf den Einlauf am Gehäuse aufschlägt, was zu Beschädigungen führen kann.

Aufgrund derselben Ursache kann es auch zu einem "Aufsteigen" des Zugelementes von der Wickelfläche der Wickeltrommel kommen, also das Auftreten eines radialen Abstandes zwischen Zugelement und Mantelfläche der Wickeltrommel, und dabei im schlimmsten Fall zu einer unregelmäßigen Bewicklung.

### Weiterbildung mittels Magneten:

Eine Begrenzung der Drehgeschwindigkeit beim Aufwickeln der Wickeltrommel wird erreicht, indem eine berührungslose, magnetische Bremse verwendet wird. Die dabei beteiligten Bauteile müssen aus einem elektrisch leitenden Material bestehen.

Das Bremsmoment wird erzeugt zwischen einem exzentrisch liegenden Bereich der Wickeltrommel, vorzugsweise einen Bereich nahe deren Außenumfang, und einem demgegenüber liegenden ortsfesten Punkt, beispielsweise des Gehäuses der Meßwickeltrommel.

Da auf der radial außenliegenden Mantelfläche die Bewicklung mittels Band erfolgt, erfolgt die Ausrichtung der Magnete vorzugsweise in Längsrichtung, also parallel zur Rotationsachse der Wickeltrommel, zwischen zwei in dieser Axialrichtung benachbarten Bauteile.

Dabei wird aufgrund der Drehung der Wickeltrommel unabhängig vom Abstand des Bremsmagneten gegenüber dem zu beeinflussenden Bauteil zunächst ein Wirbelstrom in dem Bauteil erzeugt, welcher den Bremsmagneten trägt. Dieser Wirbelstrom hat ein Magnetfeld zur Folge, das sich über den nicht im Magnetfeld befindlichen Teil schließt und ein Bremsmoment bewirkt.

Die Bremswirkung wird - neben der Stärke des verwendeten Magneten - sehr stark von dem Abstand zwischen Magnet und zu beeinflussendem Bauteil bestimmt, weshalb dieser Abstand vorzugsweise einstellbar sein soll.

Das jeweils vom Bremsmagnet zu beeinflussende Bauteil muß aus elektrisch leitfähigem Material, beispielsweise Aluminium, bestehen. Bei Anordnung der Magnete an der Wickeltrommel erhöht sich deren träge Masse, weshalb zunächst der Gedanke naheliegt, den bzw. die Bremsmagneten an einem ortsfesten Punkt z. B. des Gehäuses anzuordnen. Dies würde auch den Zwang einer paarweisen, nicht unwuchtigen, Anordnung der Bremsmagnete beheben, und es würden auch mehr Raum, z. B. für den Einsatz eines Magnethalters für die Einstellbarkeit Luftspaltes, zur Verfügung stehen.

Für die Anordnung der Bremsmagnete an der Wickeltrommel spricht jedoch die Möglichkeit, diese Bremsmagnete gleichzeitig und damit funktionsvereinigt als Haltemagnete zu nutzen.

Unter Haltemagneten sollen hier Magnete verstanden werden, die das radiale 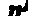 Aufsteigen" des Bandes von der Wickelfläche, der Außenfläche des Wickelzylinders, vermeiden sollen, indem das (für diesen Zweck notwendigerweise magnetisierbare) Material des Bandes durch Magnetkraft radial nach innen gegen die Wickelfläche gezogen wird. Derartige Haltemagnete müssen dementsprechend radial innerhalb der Wickelfläche an der Wickeltrommel eingesetzt werden, vorzugsweise also auf der Innenseite des aus dünnem Material bestehenden Wickelzylinders befestigt werden, vorzugsweise wiederum über den Umfang der Wickeltrommel verteilt. Auch hier empfiehlt sich die Ausrichtung der Magnetisierungsachse des Magneten parallel zur Rotationsachse der Wickeltrommel, also z. B. die Anordnung eines Stabmagneten, insbesondere eines Permanentmagneten, in Längsrichtung liegend.

Die Magnetkraft kann in beiden Fällen bekanntermaßen durch die Anordnung von sogenannten Polschuhen, also die dichte Anlage von Eisenwerkstoffen auf wenigstens einer Außenseite des Magneten, erhöht werden, um die Magnetverluste zu reduzieren. In derjenigen Richtung, in welcher der freie Ein- bzw. Austritt der Feldlinien in den Magneten benötigt wird, darf vorzugsweise keine Abdeckung durch einen Polschuh erfolgen. Es werden deshalb hauptsächlich topfförmige Polschuhe bevorzugt, die beim Bremsmagneten mit ihrer offenen Seite gegen das zu beeinflussende Bauteil und beim Haltemagneten mit der offenen Seite radial nach außen gegen das Band gerichtet sind.

Zusätzlich ist eine Erhöhung der Bremskraft möglich, indem sogenannte Seltenerd-Magnete, also Magnete mit Bestandteilen aus Somarium, Kobalt, Neodym, und/oder Bor verwendet werden. Insbesondere sind mit derartigen Seltenerd-Magneten scheibenförmige Magnete realisierbar, deren Magnetisierungsachse parallel zur Dicke der Scheibe durch die Scheibe hindurch verläuft und/oder die dabei sektorartig unterschiedlich magnetisiert sein können.

Derartige scheibenförmige Magnete können in den beengten Platzverhältnissen der Zugelement-Wegsensoren einfacher untergebracht werden als längliche Stabmagnete.

Insbesondere ist die Aufnahme dieser scheibenförmigen Magnete in der Stirnseite von Gewindebolzen als Magnethalter möglich, die dann in den tragenden Bauteil durch Verschraubung an das zu beeinflussende Bauteil näher herangeführt oder von diesem weiter abgerückt werden können zur Einstellbarkeit der gewünschten Wirkung.

Alternativ und/oder ergänzend zu den Haltemagneten kann auch über den Außenumfang der beweglichen Wickeltrommel ein Gleitband, insbesondere ein Textil-Band oder ein Filzband oder insbesondere aus Kunststoff wie PE, POM, PTFE bestehend, gelegt werden, welches bei korrekter Bewicklung der Wickeltrommel keinen Kontakt zu der Meßseilwicklung hat, bzw. kraftlos an diesem anliegt, jedoch bei Aufsteigen des Bandes eine Kraft auf des aufsteigende Band bewirkt.

### c) Ausführungsbeispiele

Eine Ausführungsform gemäß der Erfindung ist im folgenden beispielhaft näher erläutert. Es zeigen:
- Fig. 1:: eine Schnittdarstellung durch die Rotationsachse,
- Fig. 2:: eine Aufsicht auf den Wegsensor quer zur Rotationsachse,
- Fig. 3:: eine Aufsicht in Blickrichtung der Rotationsachse,
- Fig. 4:: eine Hubvorrichtung in Seitenansicht,
- Fig. 5:: einen Horizontalschnitt durch diese Hubvorrichtung der Fig. 4,

### Weiterbildung mittels Magneten:

- Fig. 6:: die Bremsmagnete im Gehäuse,
- Fig. 7:: die Bremsmagnete in der Wickeltrommel,
- Fig. 8:: eine Frontansicht der Wickeltrommel der Fig. 7,
- Fig. 9:: Detaildarstellungen der Bremsmagnete,
- Fig. 10:: unterschiedlich magnetisierte Magnete,
- Fig. 11:: einen Schnitt durch eine weitere Ausführungsform eines Zugelement-Wegsensors,
- Fig. 12:: eine Ansicht der Wickeltrommel aus Fig. 11,
- Fig. 13:: eine weiter Bauform des Zugelementwegsensors,
- Fig. 14:: eine erste Lösung mit Bremsmagneten,
- Fig. 15:: eine zweite Lösung mit Bremsmagneten und einer Feder innerhalb der Wickeltrommel,
- Fig. 16:: eine dritte Lösung mit Bremsmagneten und Haltemagneten,
- Fig. 17:: eine vierte Lösung mit Kombimagneten, und
- Fig. 18:: eine fünfte Lösung mit Kombimagneten und Kupplung.

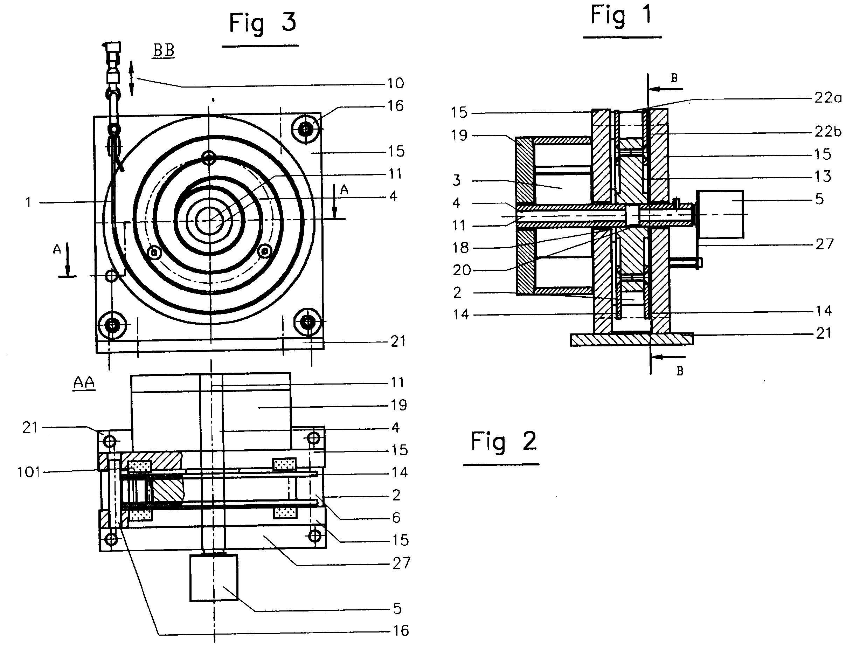

Während die Figuren 1 und 2 den Wegsensor aus Übersichtlichkeitsgründen ohne das als Zugelement dienende Band 1 zeigen, ist dieses Band 1 in der Fig. 3 eingezeichnet einschließlich der spiraligen Aufwicklung auf der Meßwickeltrommel 4. In der Querschnittsdarstellung der Fig. 1 ist die koaxiale Anordnung der Wickeltrommel 2, des Drehwinkelgebers 5 und der Flachspiralfeder 3 zu erkennen.

Die Wickeltrommel 2 besteht aus einem Trommelkern 13, der drehfest mittels eines Toleranzringes 20 auf dem Außenumfang einer hohlen Welle 4 befestigt ist, sowie auf den Stirnseiten des Wickelkernes 3 verschraubte, ringförmige Stirnscheiben 14, die axial über den Außenumfang des Trommelkernes hinausragen und dadurch die notwendigen stirnseitigen Flanken 22a, 22b bilden, die ein axiales Verrutschen des dazwischen aufzuwickelnden Bandes 1 vermeiden.

Die Wickeltrommel 2 ist in einem Gehäuse aufgenommen, welches aus zwei stirnseitig links und rechts neben der Wickeltrommel 2 angeordneten Gehäuseplatten 15 besteht, die in axialer Richtung über Gehäusebolzen 16 außerhalb des Bereiches der Wickeltrommel 2 miteinander verbunden sind.

Wie Fig. 3 zeigt, sind die Gehäuseplatten 15 vorzugsweise rechteckig ausgebildet, und in den über die Wickeltrommel überstehenden Ecken jeweils ein solcher Gehäusebolzen 16 angeordnet.

In den Gehäuseplatten 15 ist in entsprechenden Durchgangsbohrungen die Welle 4 gelagert, auf welcher die Wickeltrommel 2 mittels z. B. eines Toleranzringes 20 drehfest befestigt ist.

Am Einlauf des Bandes 1 in das Gehäuse sind zwischen den Gehäuseplatten 15 zwei beabstandete, parallele Leitrollen 12 so angeordnet, daß sie das Band 1 zwischen sich durchgleiten lassen und eine faltenfreie Führung tangential zur Wickeltrommel 2 sicherstellen. Das Gehäuse verfügt auch über eine seitlich nach außen vorstehende Fußplatte 21.

Die Welle 4 ragt in Fig. 1 auf der linken Seite über die linke Gehäuseplatte 15 hinaus. Dort ist auf der Welle 4 eine ebenfalls spiralig in einer Ebene gewickelte Flachspiralfeder mit ihrem inneren Ende auf der Welle befestigt, und mit ihrem äußeren Ende an dem die Flachspiralfeder 3 umgebendem Lagerschild 19 befestigt, welches insgesamt topfförmig ist und mit seiner offenen Seite auf der Außenseite der angrenzenden Gehäuseplatte 15 aufsitzt und gegenüber dieser fixiert ist.

Die Welle 4 ist mit ihrem linken freien Ende in der Stirnplatte des Lagerschildes 19 gelagert.

Die Welle 4 erstreckt sich auch über die recht Gehäuseplatte 15 etwas hinaus und ist dort drehfest mit dem drehbaren Zapfen des Drehwinkelgebers 5 verbunden, mit dessen Hilfe die Drehung der Welle 4 registriert wird. Um ein Mitdrehen des Drehwinkelgebers. 5 zu vermeiden, ist dieser über eine Drehmomentstütze drehfest gegenüber der rechten Gehäuseplatte 15 befestigt mittels einer Blechgabel 27, die vom Drehwinkelgeber 5 aus radial abstrebt und an ihrem freien Ende mittels eines Drehmoment-Stützbolzens 28 an der Gehäuseplatte 15 befestigt ist.

Fig. 3 zeigt dabei das ausschlaggebende Merkmal, nämlich das spiralige Übereinanderwickeln des Bandes 1 in einer einzigen, lotrecht zur Rotationsachse 11, der Mitte der Welle 4, liegenden Radialebene.

Das Band 1 besitzt dabei eine Breite 6, wie in Fig. 2 eingezeichnet, die nur geringfügig kleiner ist als der lichte Abstand zwischen den Flanken 22a, 22b der Wickeltrommel 4.

Wenn als Band 1 zusätzlich ein Band verwendet wird, welches in der Ebene des abgewickelten Bandes, quer zu seiner Längsrichtung nicht oder nur sehr geringfügig auslenkbar ist, wie dies etwa bei einem Metallband der Fall ist, können durch diese Seitenstabilität des Bandes auch seitliche Verlagerungen des am freien Ende des Bandes befestigten Bauteiles verhindert werden.

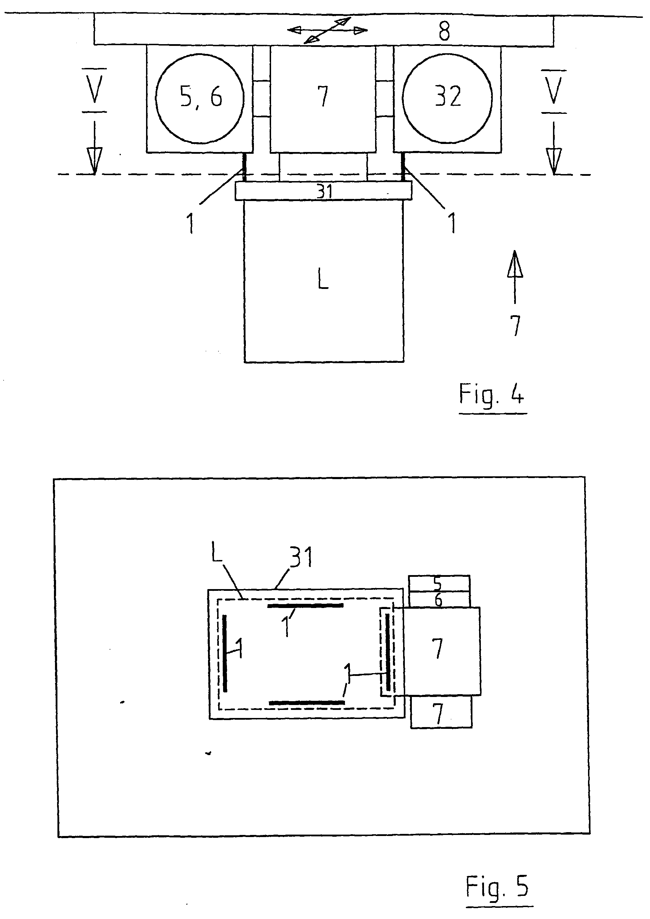

Dies ist beispielsweise dann notwendig, wenn mehrere der vorbeschriebenen Wegsensoren, zusätzlich ausgestattet jeweils mit einem antreibenden Motor, zu einer Hubvorrichtung kombiniert werden, wie im folgenden anhand der Figuren 4 und 5 beschrieben:

Grundsätzlich besteht in manchen Anwendungsfällen der Hubvorrichtung das Problem, daß für Lagerungssysteme etc. Gegenstände übereinandergestapelt und/oder wieder von den Stapeln entnommen wreden müssen, was meist im Inneren eines Gebäudes von statten geht. Je höher die Stapel im Vergleich zur freien inneren Höhe des Gebäudes sein sollen, um so beschränkter ist der verbleibende vertikale Spielraum zum Einbau der Hubvorrichtung.

Als Hubvorrichtung sind beispielsweise Teleskoparme, Gelenkarme und ähnliches bekannt, die mit Hilfe von elektronischen Steuerungen sehr positionsgenau zum Ergreifen bzw. Absetzen der Last gesteuert werden können. Im Vergleich zur bewältigbaren Stapelhöhe benötigen solche Hubvorrichtungen jedoch über der maximalen Stapelhöhe noch erheblichen Freiraum bis zur Unterkante der Gebäudedecke.

Mit weniger Freiraum kommen Laufkräne oder ähnliches aus, bei denen das Seil platzsparend aufgewickelt wird. Aufgrund der seitlichen Auslenkung eines solchen Kranseiles ist jedoch eine positionsgenaue, insbesondere mannlose Positionierbarkeit gegenüber der aufzunehmenden Last in der Regel nicht erzielbar.

Aus diesem Grund ist es bereits bekannt, eine aufzunehmende oder abzusetzende Last statt mit einem Kranseil mit zwei beabstandeten oder gar vier im Viereck angeordneten, aufwickelbaren Bändern, die in vertikaler Richtung verlaufen, und unter der Gebäudedecke aufgewickelt werden, zu ergreifen.

Dies hat den Vorteil eines geringen vertikalen Raumbedarfs unter der Gebäudedecke, vermeidet jedoch den Nachteil einer seitlichen Auslenkung und schlechten Positionierbarkeit, da hierfür Bänder gewählt werden, die in ihrer Ebene quer zu ihrer Längserstreckung nicht verformbar und damit nicht auslenkbar sind. Insbesondere durch vier im jeweils rechten Winkel zueinander angeordnete solche Bänder kann auch über große Hubhöhen eine exakte Ergreifung bzw. ein exaktes Absetzen der Last erfolgen.

Dabei muß natürlich auch in vertikaler Richtung eine Positionsbestimmung erfolgen, vorzugsweise durch Bestimmung des Abstandes des freien Endes der Bänder von deren Wickeltrommel. Hierfür wurden optische Systeme eingesetzt oder die bekannten Zugelement-Wegsensoren mit den in einer Wicklung auf der Wickeltrommel aufgewickelten Bändern als Zusatzaggregat zu der mit Bändern arbeitenden Hubvorrichtung.

Erfindungsgemäß wird nun vorgeschlagen, beide Einheiten in einer funktionsvereinigten einzigen Bauform zu lösen.

Zu diesem Zweck greifen die Bänder mehrerer Hubvorrichtungen gemeinsam entweder direkt an der Last L oder einem Befestigungsteil 31 an, welches dem Befestigen an der Last L dient, wie in den Figuren 4 und 5 dargestellt.

Bei der gezeichneten Lösung greifen vier Hubeinrichtungen 7 mit ihrem jeweiligen Band 1 so an dem Adapter 31 an, daß - in Bewegungsrichtung der Bänder 1 betrachtet - die vier Bandquerschnitte im Rechteck zueinander stehen. Bei mindestens zwei einander gegenüberliegenden der Hubeinheiten muß die Wickeltrommel 2 motorisch antreibbar wenigstens in der Aufwickelrichtung sein, um die Last L heben zu können. Bei den beiden anderen Hubeinheiten 7 ist dies nicht unbedingt notwendig aber sinnvoll, da diese nur der Stabilisierung der Last dienen.

Jede der Hubeinheiten muß auch mit einer Spanneinrichtung zum Vorspannen der Wickeltrommel 2 in die Aufwickelrichtung ausgestattet sein. Dies kann jedoch gleichzeitig auch der motorische Antrieb sein, der in einer beliebigen Aufwickel-Stellung nicht nur angehalten werden kann, sondern in dieser Position die Wickeltrommel 2 auch selbsthemmend fixiert, so daß ein Losewerden der Wicklung, z. B. bei auf dem Untergrund aufsitzender Last, vermieden werden kann.

Die motorischen Antriebe aller motorisch angetriebenen Hubeinheiten müssen miteinander synchronisiert sein.

Darüber hinaus ist - wie am besten in Fig. 5 zu erkennen - bei mindestens einer der Hubeinheiten 7, vorzugsweise bei jeder Hubeinheit, die Wickeltrommel 2 mit einem Drehwinkelgeber zum Registrieren der aufgewickelten bzw. abgewickelten Winkelsegmente der Wickeltrommel 4 und damit - nach entsprechender elektronischer Auswertung - der abgewickelten bzw. aufgewickelten Länge des Bandes 1 vorhanden. Damit ist der momentane Abstand der Last L bzw. des Adapters 31 von der Hubeinheit bekannt, und die Motoren 32 können zum positionsgenauen Absetzen bzw. Aufnehmen der Last L entsprechend gesteuert werden.

Für den Einsatz in einem Lager zum Stapeln und Abnehmen von Lasten übereinander und in Türmen nebeneinander sind die zusammenwirkenden vier Hubeinheiten an der Unterseite eines Schlittens 8 montiert, welcher in einer horizontalen Längs- und Querrichtung verfahrbar ist, so daß mit der Last L jeder gewünschte Punkt in den drei Raumrichtungen angefahren werden kann.

### Weiterbildung mittels Magneten:

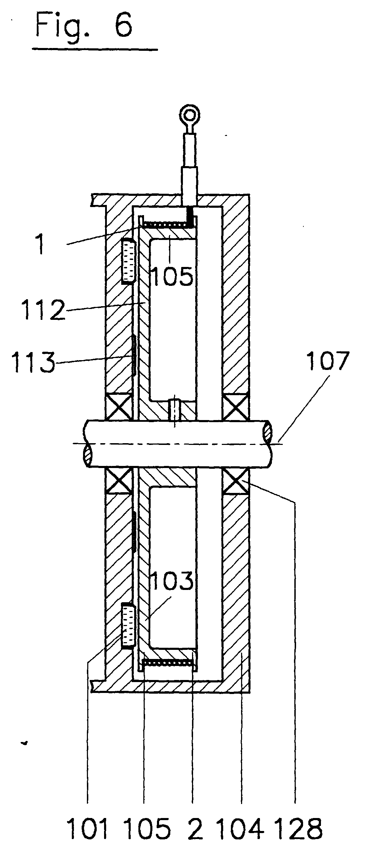

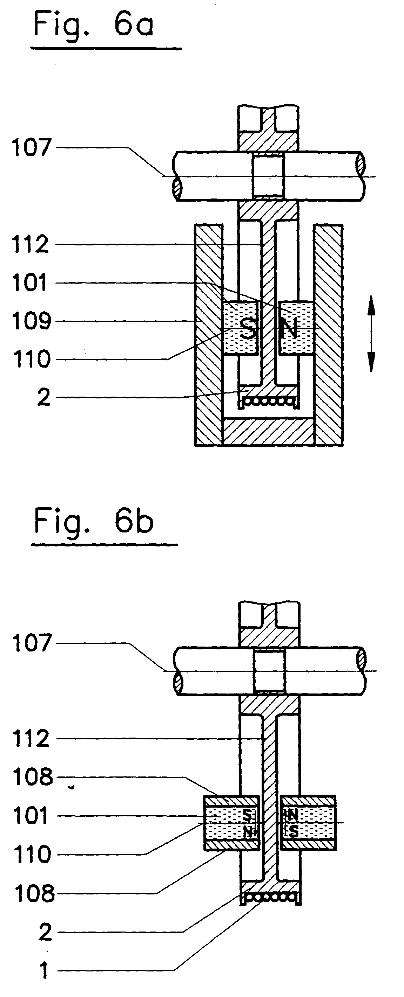

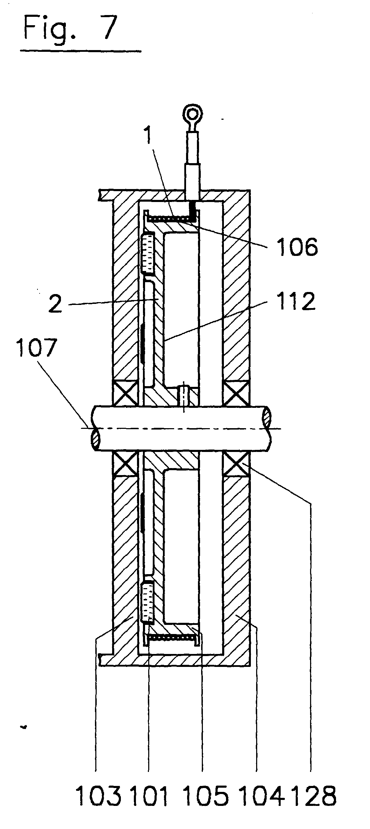

Die Fig. 6 und 7 zeigen jeweils die Wickeltrommel 2, die auf einer Welle befestigt ist und damit um ihre Rotationsachse 107 rotieren kann. Zu diesem Zweck ist die Welle mittels Lagern 128 im Gehäuse gelagert, welches aus einem kastenförmigen, vorzugsweise geschlossenen, Profil 26 besteht.

Die Wickeltrommel 2 besteht aus einem Wickelzylinder 105, der radial nach außen weisende, begrenzende Anschläge an beiden Stirnseiten für das auf der Wickelfläche 106, dem Außenumfang des Wickelzylinders 105, aufzuwickelnde Band 1 aufweist. Der Wickelzylinder 105 geht einstufig über einzelne Speichen oder eine Speichenplatte in den Nabenbereich der Wickeltrommel über.

Während in Fig. 6 die Speichen bzw. Trommelplatte 112 mit dem einen axialen Ende des Wickelzylinders 105 und damit der Wickeltrommel 2 zusammenfällt und damit nahe an der linken Wand des Gehäuses des Profiles 26 liegt, ist diese Trommelplatte 112 bei der Lösung gem. Fig. 7 vom äußeren axialen Rand etwas zurückversetzt.

Entsprechend sind in Fig. 6 der mindestens eine Bremsmagnet 101 in derjenigen Wand des Profiles 26 angeordnet, die der Trommelplatte 112 in geringem axialem Abstand gegenübersteht, so daß nur ein geringer Luftspalt zwischen den Bremsmagneten 101 und der Trommelplatte 112 besteht.

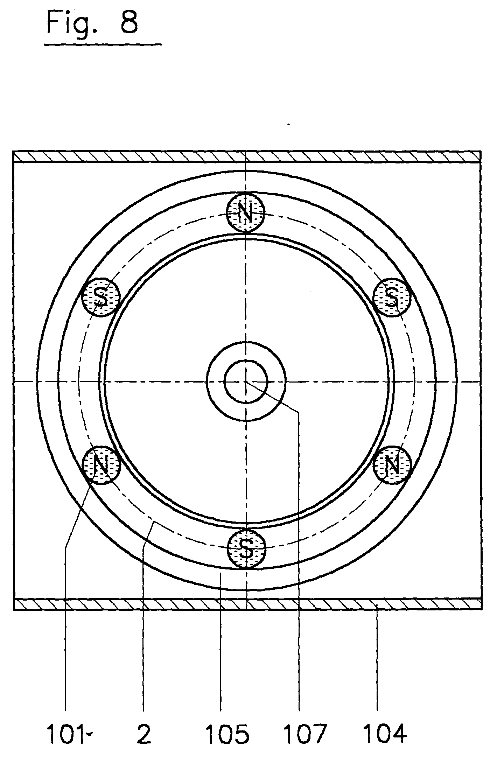

Der bzw. die Bremsmagnete 101 sind im radial äußeren Bereich der Wickeltrommel 2, nahe an oder im Bereich deren Wickelzylinder 105, angeordnet, und zwar über den Umfang verteilt, wie Fig. 8 zeigt.

Eine Erhebung an dieser Wand des Gehäuses 104 dient als Kontaktschutz 113, also zur Verhinderung des Anhaftens der Wickeltrommel 2 an den Bremsmagneten 101 in axialer Richtung.

Wie die Detaildarstellung der Fig. 6a zeigt, können - vor allem bei in axialer Richtung mittig stehender Trommelplatte 112 - die Bremsmagnete 101 von beiden Seiten aus in axialer Richtung fluchtend gegen diese Trommelplatte 112 gerichtet sein. Die beiden Bremsmagnete 101, die mit unterschiedlichen Polen gegen die Trommelplatte 112 gerichtet sind, können auf den Innenseiten eines U-förmigen Magnethalters 109 befestigt sein, welcher das radial äußere Ende der Wickeltrommel 2 umgreift, und dabei insbesondere auch in radialer Richtung verlagerbar ist zur Veränderung der Bremskraft.

Die Detaillösung gemäß Fig. 6b zeigt ebenfalls von beiden axialen Richtungen gegen die Trommelplatte 112 gerichtete Bremsmagnete 101, die jedoch - im Gegensatz zu den Bremsmagneten 101 in Fig. 6a - eine Magnetisierungsachse 110 parallel zur Trommelplatte 112, nämlich in Radialrichtung der Trommelplatte, aufweisen, und jeweils außen von plattenförmigen Polschuhen 108 umgeben sind.

Im Gegensatz dazu sind bei der Lösung gem. Fig. 7 die Bremsmagnete 101 in der Trommelplatte 112 unmittelbar radial innerhalb des Wickelzylinders 105 der Wickeltrommel 105 angeordnet, und weisen gegen die in geringem Abstand gegenüberliegende Wand des Profiles 26. Auch hier ist durch eine Erhöhung ein Kontaktschutz 113 ausgebildet, dieses Mal jedoch an der Wickeltrommel 2.

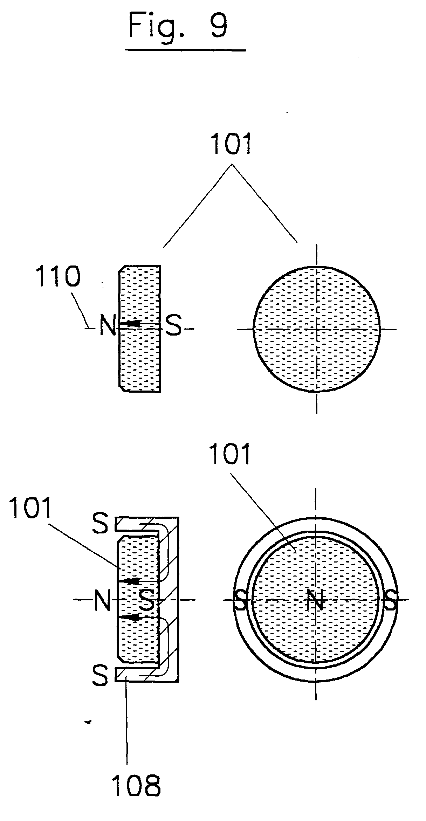

In beiden Fällen werden Magnete als Bremsmagnete 101 eingesetzt, die in Fig. 9 in zwei Versionen in Front- und Seitenansicht dargestellt sind. Dabei ist ersichtlich, daß in beiden Fällen der eigentliche Bremsmagnet 101 in Durchgangsrichtung durch die Dicke der Scheibe magnetisiert ist, so daß die eine Stirnfläche den Nordpol und die andere den Südpol darstellt. Bei der in Fig. 9 unteren Ausführungsform ist dabei der Südpol sowie der Umfang des scheibenförmigen Magnetes durch einen topfförmigen einstückigen Polschuh 108 aus Weicheisen abgedeckt, wodurch in der Funktion der Südpol dieses Magneten verlagert wird, indem die Feldlinien außerhalb des Südpoles durch den Polschuh 108 hindurch zur offenen Frontseite des topfförmigen Polschuhes geführt werden.

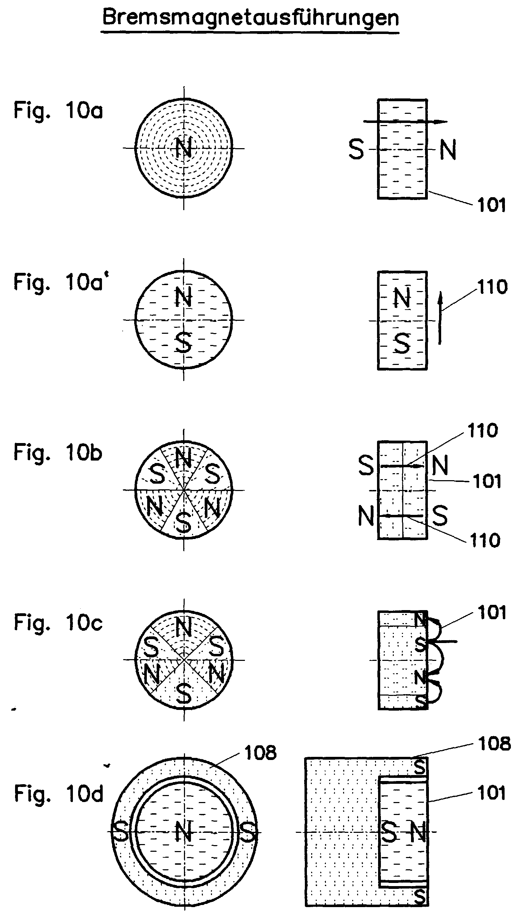

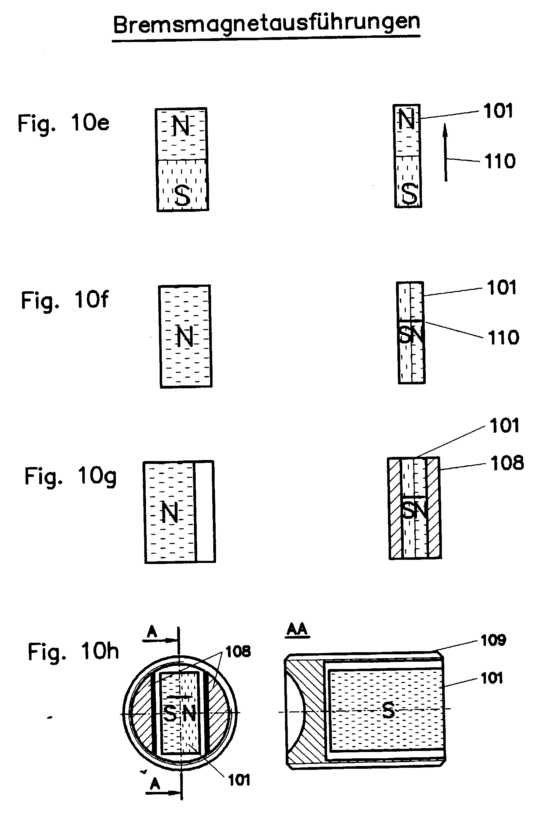

Fig. 10 zeigen unterschiedliche Magnetisierungsarten von scheibenförmigen Magneten. Dabei entspricht Fig. 10a der Lösung gem. Fig. 9, wobei jeweils die gesamte Stirnfläche der Scheibe einem Pol, also Nordpol oder Südpol, entspricht. Die Axialrichtung der Scheibe ist somit die Magnetisierungsachse. Im Gegensatz dazu ist in Fig. 10a' die Magnetisierungsachse parallel zur Scheibenebene.

Bei einer Lösung gem. Fig. 10b ist die Magnetisierungsachse 110 zwar ebenfalls parallel zur dicken Abmessung der Scheibe, jedoch ist der Scheibenumfang in mehrere, in diesem Fall sechs, Sektoren unterteilt, und jeder Sektor separat in Durchgangrichtung magnetisiert, jedoch mit in Umfangsrichtung abwechselnder Polung, so daß auf einer Stirnseite über den Umfang verteilt, sechs verschiedene, einander abwechselnde Pole vorliegen, gleiches auf der gegenüberliegenden Stirnseite (axial sektorenförmig durchmagnetisiert).

Fig. 10c zeigt eine ähnliche sektorenförmig unterschiedliche Magnetisierung in Umfangsrichtung, jedoch ist hierbei die Scheibe des Magneten in Durchgangsrichtung nicht durchmagnetisiert, sondern nur eine der Stirnflächen insgesamt magnetisiert, so daß diese magnetisierte Stirnfläche als eine in Umfangsrichtung betrachtet als Aneinanderreihung von unterschiedlich geformten Stabmagneten betrachtet werden kann (sektorenförmig laterale Magnetisierung auf einer Fläche).

Fig. 10d zeigt den Magneten der Fig. 10a, umgeben von einem topfförmigen Polschuh, wie er auch bereits in Fig. 9, untere Darstellung, dargestellt und beschrieben ist.

Die Figuren 10e-10h zeigen dagegen Stabmagnete. Bei der Lösung in Fig. 10e ist die Längsrichtung des Stabes die Magnetisierungsrichtung, also mit dem Nordpol am einen schmalseitigen Ende und dem Südpol am gegenüberliegenden schmalseitigen Ende.

In Fig. 10f verläuft dagegen die Magnetisierungsrichtung 110 quer zur Längserstreckung des Stabmagneten, also mit dem Nordpol auf der einen Breitseite und dem Südpol auf der anderen Breitseite.

Gleiches gilt auch für den Magneten gemäß Fig. 10g, der zusätzlich von einem U-förmigen Polschuh 108, vorzugsweise aus Weicheisen, umgeben ist, dessen frei endende Schenkel parallel zu den Südpol- und Nordpolflächen angeordnet sind.

Eine solche Lösung zeigt prinzipiell auch die Fig. 10h, bei der jedoch die Außenkonturen der Polschuhe 108 in der Aufsicht betrachtet so konvex gekrümmt sind, daß ein insgesamt etwa runder Außenumfang entsteht.

Dadurch können Magnet 101 und die beiden Polschuhe 108 gemeinsam in eine zylindrische stirnseitige Bohrung eines Magnethalters 109 eingesetzt werden, der an seinem ebenfalls zylindrischen Außenumfang ein Außengewinde zum Einschrauben in eine Befestigungsöffnung aufweist.

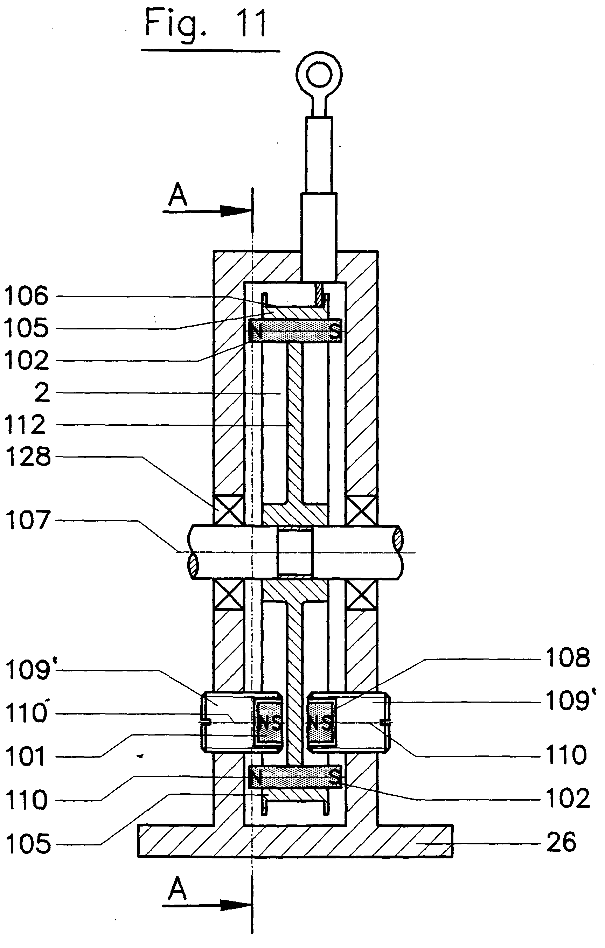

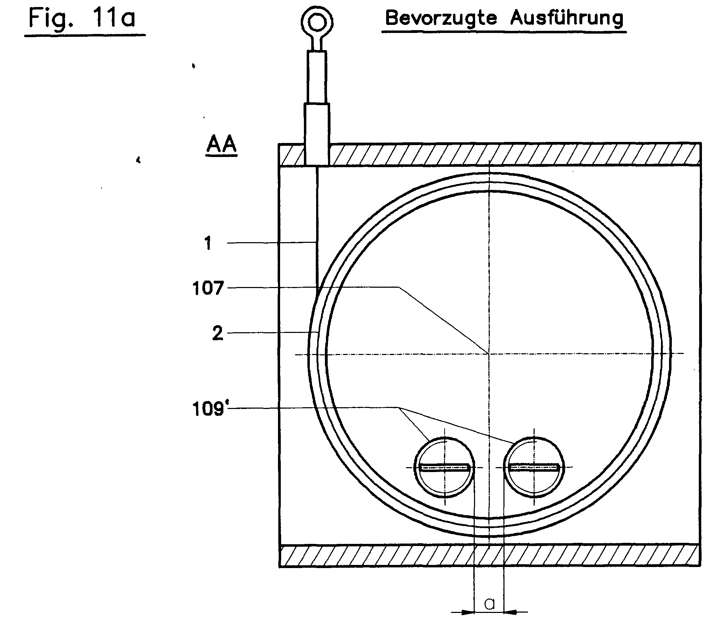

Fig. 11 zeigt wiederum eine Schnittdarstellung entlang der Rotationsachse 107.

Auch hier ist die Wickeltrommel 2 mittels ihrer Achse und Lagern 128 in den Seitenwänden eines Profiles 26 gelagert, welches als Gehäuse dient.

Im Gegensatz zu den Lösungen von Fig. 6 oder Fig. 7 ist die Speichenplatte 112 der Wickeltrommel 2 in axialer Richtung mittig zu dem Wickelzylinder 105 angeordnet, dessen Außenfläche, die Wickelfläche 106, von einem Band 1 bewickelt, dargestellt ist. In der unteren Bildhälfte der Fig. 11 sind an der Innenfläche des Wickelzylinders 105 bzgl. der Speichenplatte 112 gegenüberliegend zwei stabförmige Haltemagnete 102 angeordnet, die mit entgegengesetzten Polen gegeneinander, also gegen die Trommelplatte 112, weisen. Die Haltemagnete 102 stehen dabei vorzugsweise in Längsrichtung etwas über die Außenflächen der Wickeltrommel 2 vor.

Um die Wickeltrommel 2 nicht unwuchtig werden zu lassen, ist das gleiche Paar von Haltemagneten 102 auf der bzgl. der Rotationsachse 107 der Wickeltrommel 2 gegenüberliegenden Seite ebenfalls auf der radial innenliegenden Fläche des Seilzylinders 105 angeordnet. Die Befestigung erfolgt dabei vorzugsweise durch Kleben.

Auch eine Durchbohrung der Trommelplatte 112 in Längsrichtung und Hindurchstecken eines einzigen anstelle der beiden fluchtenden Stabmagnete als Haltemagnet 102 ist denkbar.

Fig. 11 weist jedoch zusätzlich in der unteren Bildhälfte auch ein Paar von Bremsmagneten 101 auf. Diese sind jedoch an den Seitenwänden des Profiles 26 angeordnet und reichen - radial innerhalb des Wickelzylinders 105 - bis nahe an die Trommelplatte 112 der Wickeltrommel 2 heran. Zur Einstellbarkeit des Luftspaltes dazwischen sind die beiden Bremsmagnete 101 - die wiederum mit ihrer Magnetisierungsrichtung parallel zur Rotationsachse 107 angeordnet und mit entgegengesetzten Polen aufeinander zu ausgerichtet sind - jeweils in Vertiefungen in den aufeinander zu gerichteten Stirnseiten von Magnethaltern 109 angeordnet, welche ein Außengewinde aufweisen, mit dessen Hilfe sie in einer entsprechenden, axial verlaufenden Gewindebohrung durch die Wandung des Profiles hindurch verschraubbar und damit hinsichtlich der Größe des Luftspaltes einstellbar sind.

Die beiden Bremsmagnete 101 befinden sich dabei zur Steigerung der Magnetkraft jeweils in einem topfförmigen Polschuh 108, dessen offene Seite hierbei jeweils ebenfalls in Richtung auf die Trommelplatte 112 und damit auf den gegenüberliegenden Bremsmagneten 101 zugerichtet sind.

Die Seitenansicht dieser Lösung in Fig. 11a zeigt weiterhin die Möglichkeit, entlang des Umfanges verteilt nicht nur einen, sondern mehrere solche Bremsmagnete 101 in Magnethaltern 109 in den Wänden des Profiles 26 anzuordnen, wobei ein Mindestabstand a dazwischen eingehalten werden muß, um eine negative gegenseitige Beeinflussung der Bremsmagnete 110 zu verhindern.

Fig. 11a zeigt ferner, daß nicht unbedingt eine über den Umfang gleichmäßige Verteilung der Bremsmagnete 101 bzw. Magnethalter 109 vorhanden werden muß.

Die Haltemagnete 102 sind dabei aus Übersichtlichkeitsgründen nicht eingezeichnet.

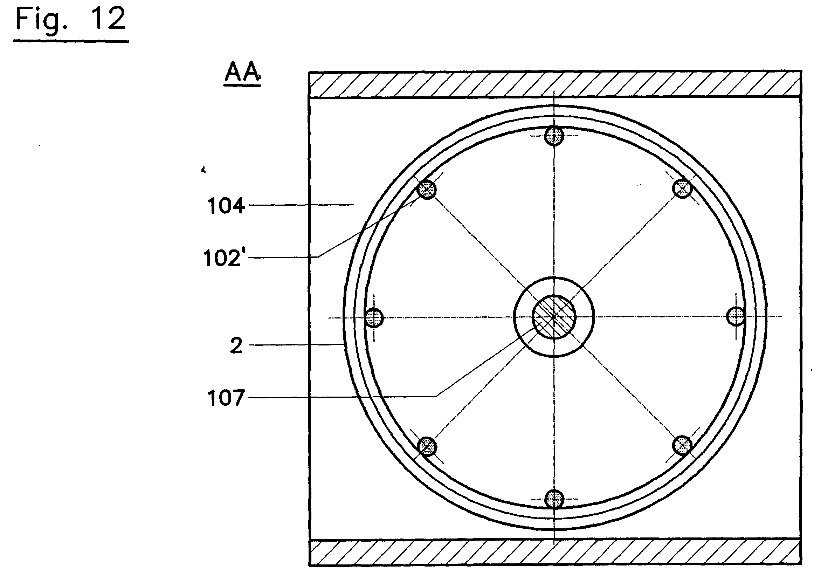

Fig. 12 zeigt eine andere Frontansicht auf die Wickeltrommel 2 gem. der Linie A-A der Fig. 11.

Durch entsprechende Schnittführung sind dabei in Fig. 12 ausschließlich die Haltemagnete 102 an der Wickeltrommel 2 zu erkennen, von denen acht Stück in einem Abstand von jeweils 45 Grad angeordnet sind. Diese Darstellung soll verdeutlichen, daß bei der Wahl ausreichend starker Haftmagnete 102 diese Magnete als Kombimagnete 102' dienen können, sofern deren Luftspalt zum benachbarten Gehäuse, insbesondere der Gehäuseseitenwand des Profiles 26, richtig dimensioniert ist. In diesem Fall kann vollständig auf zusätzliche separate Bremsmagnete verzichtet werden.

Unabhängig davon funktionieren alle dargestellten Lösungen immer nur unter der Grundvoraussetzung, daß
- bei den Haltemagneten das durch die Magnete beaufschlagte Band 1 aus einem magnetisierbaren Material bestehen muß, bzw.
- bei den Bremsmagneten das beeinflußte Bauteil (also bei Anordnung der Bremsmagnete an der Wickeltrommel das Gehäuse oder bei Anordnung der Bremsmagneten am Gehäuse die Wickeltrommel (wenigstens im beeinflußten Bereich) aus elektrisch leitfähigem Material bestehen muß oder beschichtet sein muß.

Bei Verwendung von Kombimagneten gelten diese Bedingungen kumulativ.

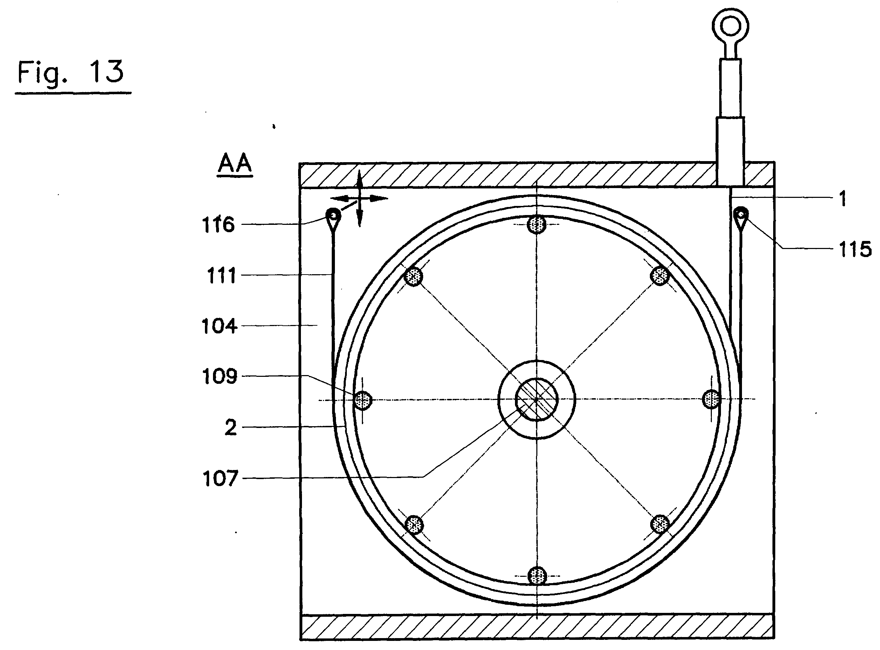

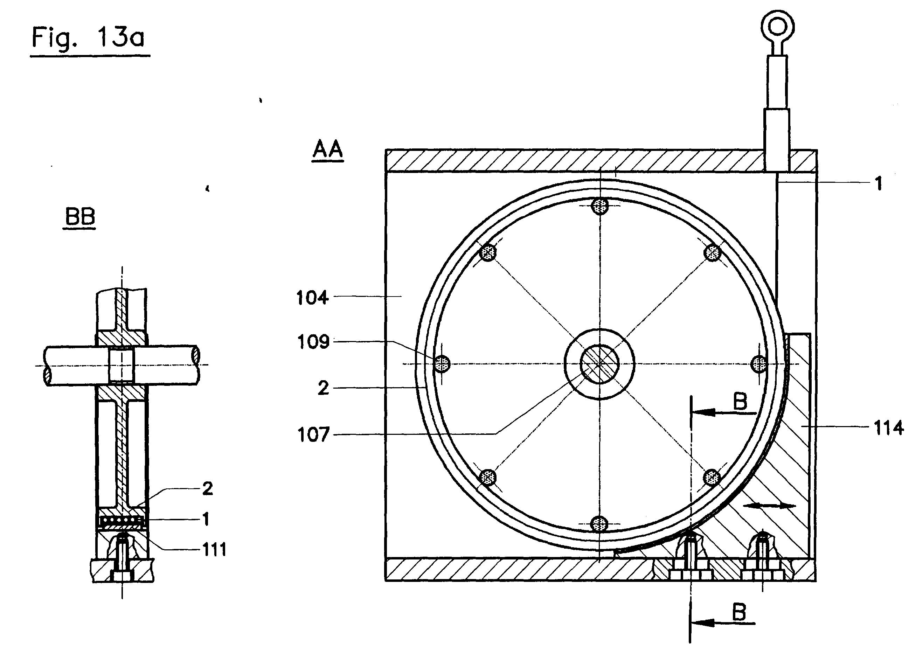

Fig. 13 zeigt eine Lösung, die sich gegenüber Fig. 12 durch ein zusätzliches Gleitband 111 unterscheidet. Dieses (endliche) 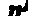 Gleitband" besteht in der Regel aus Filz oder einem anderen gut schwingungsdämpfenden Textilmaterial und ist um den vom Seileinlauf abgewandten Teil, insbesondere einen Bereich von etwa 180°, der Wickeltrommel 2 herumgelegt. Zu diesem Zweck ist das eine Ende des Gleitbandes 111 an einem Festpunkt 115 nahe des Seileinlaufs am Gehäuse befestigt, während das andere Ende um einen Verstellpunkt 116 auf der gegenüberliegenden Seite der Rotationsachse 107 der Wickeltrommel 2 am Gehäuse festgelegt ist. Der Verstellpunkt 116 kann dabei sowohl tangential als auch radial bzgl. der Achse 107 der Wickeltrommel 2 verlagert werden, insbesondere in zwei aufeinanderstehenden senkrecht stehenden Richtungen jeweils quer zur Rotationsachse 107.

Dadurch kann der im Ausgangszustand lose oder völlig fehlende Kontakt zwischen dem Gleitband 111 und der Außenseite der Seilbewicklung zur Intensivierung oder Lockerung des Kontaktes verstellt werden mit dem Ziel, ein 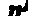 Aufsteigen", also radiales Abheben, des Bandes zu verhindern, falls hierfür die Kombimagnete 102' bzw. die Haltemagnete 102 sich als nicht ausreichend erweisen sollten. Das Aufsteigen kann bereits dadurch verhindert werden, daß im wesentlichen kein Kontakt zwischen dem Gleitband 111 und der Außenseite der Meßseilwicklung vorhanden ist, da dieser Kontakt erst bei dem unerwünschten Aufsteigen des Bandes in radialer Richtung nach außen zustande kommt. Infolgedessen muß der evtl. vorhandene Abstand zwischen Außenfläche der Seilbewicklung und Innenfläche des Haltebandes so gering wie möglich, im Idealfall annähernd Null, eingestellt werden.

Fig. 13a zeigt eine Lösung, bei der das Gleitband 111 nicht lose um die seilbewickelte Trommel herumgelegt ist, sondern sich als Belag auf einem Gleitschuh 114 befindet, dessen der Wickeltrommel 2 zugewandte Kontur der Außenkontur der bewickelten Wickeltrommel 2 entspricht. Der Gleitschuh 114 erstreckt sich um etwa 90° um die äußere Mantelfläche der Wickeltrommel 2 herum, und zwar in Aufwickelrichtung in dem an den Auflaufpunkt der Wickeltrommel anschließenden Segment. Der Gleitschuh 114 ist am Gehäuse 104 befestigt, insbesondere verschraubt und so positioniert, daß sein aus Gleitband 111 bestehender Belag den gewünschten Kontakt zur Außenfläche der Seilbewicklung der Wickeltrommel 2 aufweist, wie die Schnittdarstellung B-B zeigt.

Fig. 2 zeigt zusätzlich - gegenüber den anderen Ansichten der Figuren 1 und 3 - ebenfalls bereits Bremsmagnete 101 in den Gehäuseplatten 15 des Gehäuses, die gegen die Stirnscheiben 14 der Wickeltrommel 2 gerichtet sind.

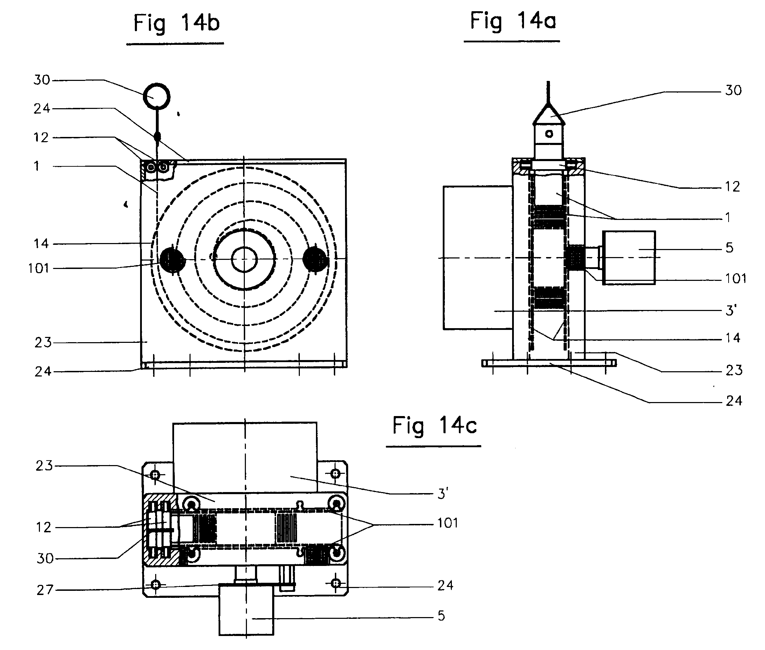

Fig. 14 zeigt in den drei Ansichten darüber hinaus eine Variante, bei der ebenfalls derartige Bremsmagnete 101 vorhanden sind, und ebenfalls diametral gegenüberliegend auf gleicher Höhe am Gehäuse. Das Gehäuse besteht dort jedoch - im Gegensatz zur Lösung der Figuren 1 - 3 - aus einem Abschnitt eines Kastenprofiles 23, dessen obere und untere, offene Stirnseiten durch Endplatten 24 verschlossen sind, deren untere seitlich über das Profil 26 hinausragt und als Befestigung gegenüber der Umgebung dient.

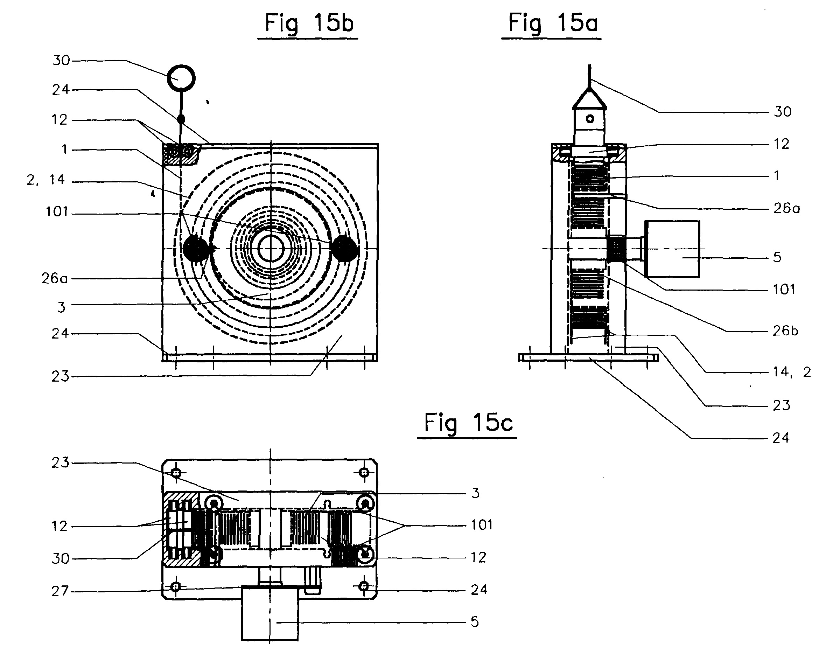

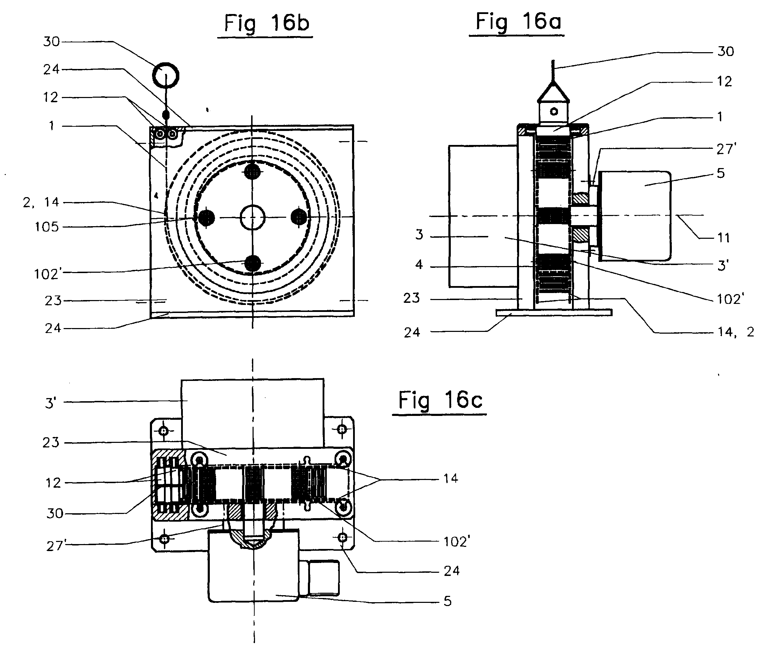

Die Lösung gemäß Figuren 15 unterscheidet sich von der gemäß Figuren 14 dadurch, daß die Flachspiralfeder 3 nicht axial versetzt zur Wickeltrommel 2 in einem separaten Gehäuse angeordnet ist, sondern koaxial im Inneren dieser Wickeltrommel. Zu diesem Zweck befindet sich innerhalb der zylindrischen Wickelfläche der Wickeltrommel 2, die stirnseitig von den Stirnscheiben 14 begrenzt wird, eine zumindest zu einer Stirnseite hin offene Aussparung, in der sich zentrisch die Welle des Drehwinkelgebers 5 hindurcherstreckt. In dem dadurch dazwischen gebildeten Ringraum ist die Flachspiralfeder 3 angeordnet, die über Befestigungspunkte 26a, 26b einerseits mit einem festen Punkt des Gehäuses und andererseits mit der Wickeltrommel verbunden ist. Dadurch wird der gesamte axiale Bauraum für ein separates Federngehäuse 3' eingespart. Die Lösung von Fig. 16 unterscheidet sich von derjenigen der Fig. 15 in zwei Punkten:

Zum einen sind in Fig. 16 die Magnete als Kombimagnete 102' ausgebildet, und erfüllen damit die Doppelfunktion, einerseits die Wickeltrommel 2 zu bremsen und andererseits das Band 1 radial nach innen auf die Wickeltrommel zu ziehen. Zu diesem Zweck sind die Kombimagnete 102' gleichmäßig über den Umfang verteilt im Inneren der Wickeltrommel 2 angeordnet, und zwar innerhalb deren zylindrischer Wickelfläche 105 angeordnet. Die Kombimagnete 102' erstrecken sich dabei axial über die gesamte Breite der Wickeltrommel 2 von der einen zur anderen der beiden Stirnscheiben 14, mit Magnetisierungsrichtung parallel zur Rotationsachse der Wickeltrommel 2.

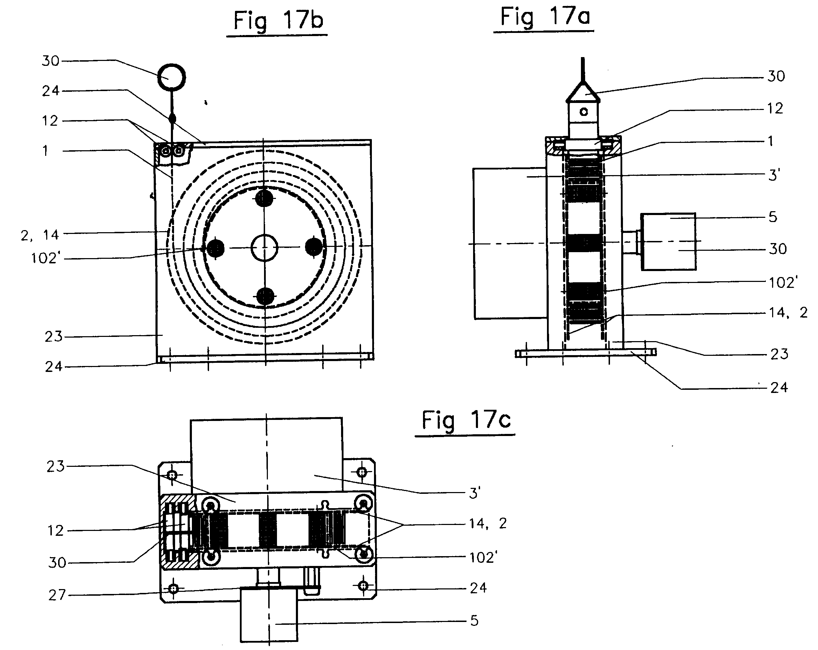

Der zweite Unterschied besteht in der Befestigung des Drehwinkelgebers 5. Dieser besitzt eine nach außen ragende Hohlwelle, welche auf die Welle 4 der Wickeltrommel 2 aufgesteckt und mit dieser drehfest verbunden ist. Als Drehmomentstütze 27' zwischen dem nicht mitdrehenden Teil des Drehwinkelgebers 5 und dem Kastenprofil 23 als Gehäuse besteht dabei aus einem Blechbiegeteil, welches in alle Richtungen quer zur Rotationsachse 11 verbiegbar ist und somit gleichzeitig dem Ausgleich eines Winkelversatzes zwischen Drehwinkelgeber 5 und Gehäuse dient. Die Drehmomentstütze 27' umschließt die Welle 4 ringförmig und ist an zwei aneinander diametral gegenüberliegenden Seiten mit dem Gehäuse, und an zwei anderen diagonal gegenüberliegenden Seiten mit dem Drehwinkelgeber 5 verschraubt. Die Lösung gemäß Fig. 17 entspricht hinsichtlich des Vorhandenseins und der Anordnung der Kombimagnete 102' der Lösung gemäß Fig. 16, verfügt jedoch über die konventionelle Drehmomentstütze 27 gemäß Fig. 14, nämlich die einseitig von der Welle 4 abragende und mit dem Gehäuse verschraubte Stütze.

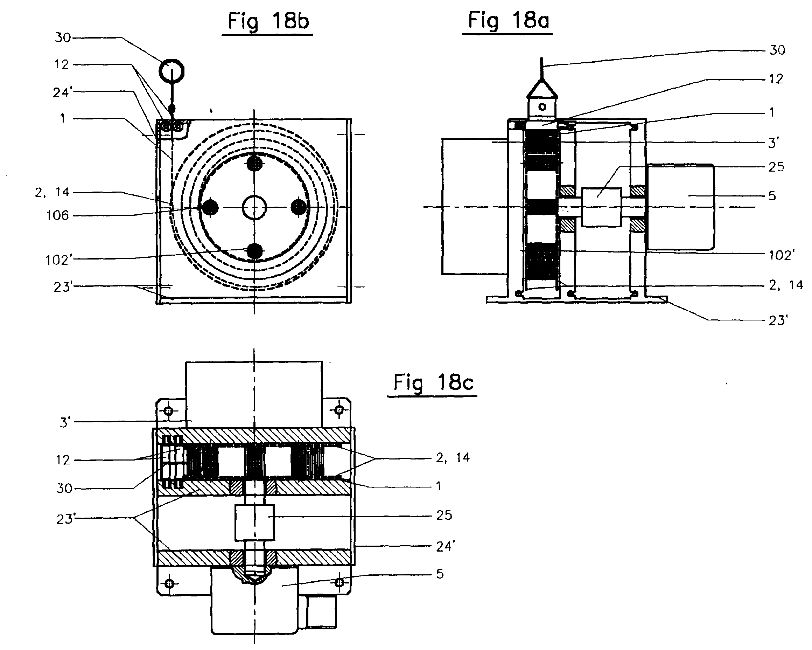

Die Lösung gemäß Fig. 18 unterscheidet sich von derjenigen der Fig. 14 dadurch, daß als Gehäuse ein Abschnitt eines Kastenprofiles mit zwei nebeneinander liegenden, jeweils im Querschnitt geschlossenen, Kammern verwendet wird, welches in horizontaler Verlaufsrichtung angeordnet ist und dessen Bodenplatte seitlich nach außen vorsteht und zur Befestigung gegenüber der Umgebung verwendet werden kann.

Die dann beidseits zur Seite hin offenen Stirnflächen sind durch entsprechende Stirnplatten 24' abgeschlossen. Dabei sitzt auf der einen Außenfläche des Kastenprofiles 23' der Drehwinkelgeber 5, während auf der anderen Außenfläche das Federgehäuse 3' mit der darin befindlichen flachen Spiralfeder 3 befestigt ist.

Eine Wickeltrommel 2 mit Kombimagneten 102' wie bei den Lösungen nach den Figuren 16 und 17 ist dabei in der dem Federgehäuse 3' benachbarten Kammer untergebracht zur Aufwicklung des Bandes 1. In der daneben befindlichen Kammer des Kastenprofiles 23 ist eine Kupplung 25 angeordnet, welche die Welle 4, auf welcher die Wickeltrommel 2 und die Drehfeder 3 befestigt sind, mit dem Wellenzapfen des Drehwinkelgebers 5 drehfest und winkelversatzausgleichend verbindet.

Die Verschraubung der Stirnplatten 24, 24' an den Kastenprofilen 23, 23' erfolgt jeweils über mit in die Kastenprofile 23' eingearbeitete, zu den inneren Kammern hin offene und hinterschnittene Schraubkanäle, in welche von den Stirnseiten her die Verschraubung der Stirnplatten selbstschneidend eingeschraubt werden können.

### BEZUGSZEICHENLISTE

- L: Last
- 1: Band
- 2: Wickeltrommel
- 3: Flachspiralfeder
- 4: Welle
- 5: Drehwinkelgeber
- 6: Vorspanneinheit
- 7: Hubeinheit
- 8: Schlitten
- 9: Seilaufsatz
- 10: Längsrichtung
- 11: Rotationsachse
- 13: Trommelkern
- 14: Stirnscheiben
- 15: Gehäuseplatte
- 16: Gehäusebolzen
- 17: Gebäudedecke
- 18: Gleitscheibe
- 19: Lagerschild
- 20: Toleranzring
- 22a, 22b: Flanken
- 23, 23': Kastenprofil
- 24, 24': Endplatte
- 25: Kupplung
- 26: Profil
- 27: Blechgabel
- 28: Drehmoment-Stützbolzen
- 31: Adapter
- 32: Motor
- 101: Bremsmagnet
- 102: Haltemagnet
- 102': Kombimagnete
- 103: Einwirkbereich
- 104: Gehäuse
- 105: Wickelzylinder
- 106: Wickelfläche
- 107: Achse
- 108: Polschuh
- 109: Verstellschraube und Magnethalter
- 110: Magnetisierungsachse
- 111: Gleitband
- 112: Trommelplatte
- 113: Kontaktschutz
- 114: Gleitschuh
- 115: Festpunkt
- 116: Verstellpunkt
- 128: Lager
- 130: Gleitrolle

## Patentansprüche

1. Zugelement-Wegsensor mit
- einer Zugelement-Wickeltrommel (2)
- einer damit wirkverbundenen Vorspanneinheit zum Vorspannen der Wickeltrommel (2) in die Aufwickelrichtung,
- einer Bestimmungseinheit zum Bestimmen der von der Wickeltrommel (2) abgezogenen Länge des Zugelementes
**dadurch gekennzeichnet**, **daß**
das Zugelement auf der Wickeltrommel (2) in einer einzigen Radialebene der Wickeltrommel (2) spiralig in mehreren Lagen übereinander gewickelt ist.

2. Wegsensor nach Anspruch 1,
**dadurch gekennzeichnet**, **daß**
das Zugelement ein Band (1) ist, dessen Querschnitt in axialer Richtung der Rotationsachse der Wickeltrommel (2) wesentlich größer, insbesondere mindestens 10-fach so groß, dimensioniert ist wie in Querrichtung hierzu, und insbesondere das Band (1) in Längsrichtung nur sehr gering, insbesondere überhaupt nicht dehnbar ist, und insbesondere das Band (1) ein Metallband ist.

3. Wegsensor nach einem der vorhergehenden Ansprüche,
**dadurch gekennzeichnet**, **daß**
die Vorspanneinheit eine Flachspiralfeder (3) ist, die insbesondere koaxial zur insbesondere in der Wickeltrommel (2) angeordnet ist.

4. Wegsensor nach einem der vorhergehenden Ansprüche,
**dadurch gekennzeichnet**, **daß**
die Bestimmungseinheit ein Drehwinkelgeber (5) ist, der mit der Wickeltrommel (2) wirkverbunden, insbesondere drehtest verbunden, ist und die zurückgelegten Winkelelemente der Wickeltrommel (2) ermittelt und an eine Auswerteelektronik meldet, wobei die Auswerteelektronik aus den zurückgelegten Winkelsegmenten die abgezogene Länge des Zugelementes ermittelt unter Berücksichtigung der sich ändernden Wicklungslänge einer Wicklung des Zugelementes je nach Anzahl der Wicklungslagen auf der Wicklungstrommel (2), und insbesondere die Bestimmungseinheit eine am Gehäuse der Wickeltrommel (2) angeordnete insbesondere elektrische Abtasteinheit ist und das Zugelement in Längsrichtung abwechselnde gleichlange Abschnitte mit wechselnden Eigenschaften, die elektrisch detektierbar sind, aufweist, insbesondere abschnittsweise unterschiedlich magnetisierbar ist, und insbesondere die Bestimmungseinheit eine Einheit zum Aussenden von Wellen, insbesondere von mechanischen, insbesondere mechanisch-elastischen Wellen und/oder Schallwellen, entlang des abgewickelten Teiles des Zugelementes umfaßt sowie eine Zeitmeßeinrichtung zum Bestimmen der Zeit zwischen Aussendung der Wellen und Eintreffen der Welle auf dem Rückweg vom freien Ende des Zugelementes.

5. Wegsensor nach einem der vorhergehenden Ansprüche,
**dadurch gekennzeichnet**, **daß**
die Berücksichtigung der variablen Wicklungslänge selbstlemend erfolgt insbesondere durch einmaliges oder mehrmaliges, teilweise sogar vollständiges, Abziehen einer definierten Länge des Zugelementes von der Wicklungstrommel.

6. Hubvorrichtung zum Heben einer Last mit wenigstens zwei Hubeinheiten und wenigstens einem Wegsensor, wobei jede Hubeinheit
- eine Zugelement-Wickeltrommel (2),
- eine damit wirkverbundene Vorspanneinheit zum Vorspannen der Wickeltrommel (2) in die Aufwickelrichtung,
- einen die Wickeltrommel (2) wenigstens in der Aufwickelrichtung antreibenden Motor (32) umfaßt, und
- die Hubvorrichtungen mit nach unten weisenden freien Enden der Zugelemente angeordnet sind
**dadurch gekennzeichnet**, **daß**
wenigstens eine der Hubvorrichtungen mit einer Bestimmungseinheit zum Bestimmen der von der Wickeltrommel (2) abgezogenen Länge des Zugelementes ausgestattet ist und alle Zugelemente an der selben Last (L) angreifen.

7. Hubvorrichtung nach Anspruch 6,
**dadurch gekennzeichnet, daß**
jede der Hubeinheiten mit einer Bestimmungseinheit ausgestattet ist.

8. Hubvorrichtung nach Anspruch 6 oder 7,
**dadurch gekennzeichnet, daß**
das Zugelement auf der Wickeltrommel (2) in einer einzigen Radialebene der Wickeltrommel (2) spiralig in mehreren Lagen übereinander gewickelt ist, und insbesondere das Zugelement ein Band (1) ist, dessen Querschnitt in axialer Richtung der Rotationsachse der Wickeltrommel (2) wesentlich größer, insbesondere mindestens 10-fach so groß, dimensioniert ist wie in Querrichtung hierzu.

9. Hubvorrichtung nach einem der vorhergehenden Ansprüche,
**dadurch gekennzeichnet**, **daß**
an der Last (L) zwei Bänder (1) im Abstand zueinander und mit den Haupterstreckungsrichtungen ihrer Querschnitte parallel zueinander angreifen, und insbesondere an der Last vier Bänder (1), deren Haupterstreckungsrichtung der Querschnitte im Viereck zueinander liegen, angreifen, und insbesondere der Motor (32) und/oder ein Adapter (31), an dem die freien Enden der Zugelemente angreifen, gleichzeitig als Spanneinrichtung zum Vorspannen der Wickelrolle (2) in die Aufwickelrichtung dient.

10. Zugelement-Wegsensor mit
- einer Wickeltrommel (2) zum Aufwickeln des Bandes (1) auf der äußeren Wickelfläche (106) des Wickelzylinders (105) der Wickeltrommel (2), und
- einem Gehäuse, in welchem die Wickeltrommel (2) gelagert ist,
**dadurch gekennzeichnet**, **daß**
- wenigstens ein Bremsmagnet (101) an einem nicht mit der Wickeltrommel (2) mitdrehenden Punkt so angeordnet ist, daß er berührungslos magnetisch auf die Wickeltrommel (2) an einem exzentrischen Einwirkbereich (103') gegen die Drehrichtung bremsend einwirkt, und
- die Wickeltrommel (2) wenigstens im Einwirkbereich (103') aus elektrisch leitfähigem Material besteht, und insbesondere der Bremsmagnet (101) am Gehäuse (104) angeordnet ist.

11. Zugelement-Wegsensor mit
- einer Wickeltrommel (2) zum Aufwickeln des Bandes (1) auf der äußeren Wickelfläche (106) des Wickelzylinders (105) der Wickeltrommel (2), und
- einem Gehäuse, in welchem die Wickeltrommel (2) gelagert ist,
**dadurch gekennzeichnet**, **daß**
- wenigstens ein Bremsmagnet (101) an der Wickeltrommel (2) exzentrisch so angeordnet ist, daß er berührungslos magnetisch auf das Gehäuse in Drehrichtung bremsend einwirkt, und
- das Gehäuse (4) wenigstens im Einwirkbereich (103') aus elektrisch leitfähigem Material besteht.

12. Zugelement-Wegsensor mit
- einer Wickeltrommel (2) zum Aufwickeln des Bandes (1) auf der äußeren Wickelfläche (106) des Wickelzylinders (105) der Wickeltrommel (2), und
- einem Gehäuse, in welchem die Wickeltrommel (2) gelagert ist,
**dadurch gekennzeichnet**, **daß**
- an der Wickeltrommel (2) radial innerhalb der Mittelfläche (106) des Wickelzylinders (105) wenigstens ein Haltemagnet (102) angeordnet ist zum Halten des Bandes (1) radial nach innen an der Wickelfläche (106), und
- das Band (1) aus magnetisierbarem Material besteht.

13. Zugelement-Wegsensor mit
- einer Wickeltrommel (2) zum Aufwickeln des Bandes (1) auf der äußeren Wickelfläche (106) des Wickelzylinders (105) der Wickeltrommel (2), und
- einem Gehäuse, in welchem die Wickeltrommel (2) gelagert ist,
**dadurch gekennzeichnet**, **daß**
um wenigstens einen Teil des Außenumfanges der ganz oder teilweise mit Band (1) beweglichen Wickelfläche (106) ein Gleitband (111), insbesondere ein Band aus Textilmaterial, insbesondere ein Gleitband oder ein Band aus anderem gleitfähigen, nicht abrasiven Material, in geringem Abstand und/oder an dem Außenumfang der Bewicklung mit Band schleifend herumgeführt ist und der Abstand, bzw. Anpreßdruck des Bandes gegen die Bewicklung mit Band (1) einstellbar ist.

14. Zugelement-Wegsensor nach einem der vorhergehenden Zugelement-Ansprüche,
**dadurch gekennzeichnet**, **daß**
der an der Wickeltrommel (2) angeordnete mindestens eine Bremsmagnet (101) und/oder Haltemagnete (102) jeweils gleichmäßig über den Umfang verteilt, insbesondere paarweise zur Vermeidung von Unwucht an der Wickeltrommel angeordnet sind, und insbesondere die Bremsmagnete (101) mit möglichst großem Abstand zur Rotationsachse (107) der Wickeltrommel (2), insbesondere nahe am Außenumfang der Wickeltrommel (105), angeordnet sind, die Bremsmagnete (101) und/oder die Haltemagnete (102) Permanentmagnete sind.

15. Zugelement-Wegsensor nach einem der vorhergehenden Zugelement-Ansprüche,
**dadurch gekennzeichnet**, **daß**
die Haltemagnete mit ihrer Magnetisierungsachse (110) parallel zur Rotationsachse (107) der Wickeltrommel (2) angeordnet sind, und insbesondere die Bremsmagnete (101) mit ihrer Magnetisierungsachse (110) parallel zur Rotationsachse (107) der Wickeltrommel (2) angeordnet und entgegengesetzt gepolt sind, die Bremsmagnete (101) mit Polschuh-Stücken radial innerhalb sowie radial außerhalb der Magnetisierungsachse (110), insbesondere mit einem tropfförmigen Polschuh-Stück (108), welches nur zu dem beeinflussenden Bauteil hin offen ist, ausgestattet ist.

16. Zugelement-Wegsensor nach einem der vorhergehenden Zugelement-Ansprüche,
**dadurch gekennzeichnet**, **daß**
die Bremsmagnete (101) und/oder die Haltemagnete (102) in einem Magnethalter (109) aufgenommen sind, dessen Position in axialer Richtung gegenüber dem zu beeinflussenden Bauteil einstellbar, insbesondere stufenlos einstellbar, ist, und insbesondere der Magnethalter (109) ein Gewindebolzen ist, an dessen einer Stirnseite der Bremsmagnet (101) und/oder Haltemagnet (102) gegen das zu beeinflussende Bauteil hin gerichtet angeordnet ist.

17. Zugelement-Wegsensor nach einem der vorhergehenden Zugelement-Ansprüche,
**dadurch gekennzeichnet**, **daß**
als Bremsmagnete (101) beidseits der Wickeltrommel (2) gegenüberliegend und in Längsrichtung mit entgegengesetzten Polen gegeneinanderweisende Magnete in Längsrichtung fluchtend angeordnet sind, und insbesondere als Bremsmagnete (101) scheibenförmige Magnete verwendet werden, deren Magnetisierungsachse (110) der Dicke des scheibenförmigen Magneten entspricht, und insbesondere als Bremsmagnete (101) scheibenförmige Magnete verwendet werden, die in Sektoren unterteilt sind, wobei die einzelnen Sektoren als Einzelmagnete wirken, deren Magnetisierungsachsen (10) jeweils der Dicke des scheibenförmigen Magneten entsprechen, wobei die Polung der einzelnen Sektoren entlang des Umfanges wechselt, und insbesondere als Bremsmagnete (101) scheibenförmige Magnete verwendet werden, bei denen nur eine der Hauptflächen magnetisiert ist durch sektorenförmig abwechselnde Magnetisierung in Umfangsrichtung.

18. Zugelement-Wegsensor nach einem der vorhergehenden Zugelement-Ansprüche,
**dadurch gekennzeichnet**, **daß**
der bzw. die. Bremsmagnete (101) und der bzw. die Haltemagnete (102) gemäß einem der vorhergehenden Ansprüche in jeweils einem Kombimagnet funktionsvereinigt sind.
